# EUROPÄISCHE PATENTANMELDUNG

(11) **EP 3 299 655 A1**
(43) Veröffentlichungstag der Anmeldung: **28.03.2018**
(21) Anmeldenummer: 17184602.5
(22) Anmeldetag: 03.08.2017
(51) Int. Cl.: F16D 48/02, F16D 25/12

(54) **AKTUATOR, KUPPLUNGSBETÄTIGUNGSVORRICHTUNG SOWIE KRAFTFAHRZEUG**

(30) Priorität: 14.09.2016 DE 102016217464
(71) Anmelder: ZF Friedrichshafen AG, 88046 Friedrichshafen (DE)
(72) Erfinder: Mäder, Fred, 97532 Üchtelhausen (DE); Tulaczko, Boleslaw, 97453 Schonungen (DE); Buhl, Jörg, 97453 Schonungen (DE)

(57) **Zusammenfassung**

Die Erfindung betrifft einen Aktuator für eine Kupplungsbetätigungsvorrichtung mit wenigstens einem Einlass zur Anbindung an einen Geberzylinder und wenigstens einem Auslass zur Anbindung an einen Nehmerzylinder, dadurch gekennzeichnet, dass sich der Einlass und der Auslass an einem Zwischenzylinder befinden, der mit einen Speicher außerhalb des Zwischenzylinders verbunden ist.

Daneben betrifft die Erfindung eine Kupplungsbetätigungsvorrichtung.

Daneben betrifft die Erfindung ein Kraftfahrzeug.

## Beschreibung

Die Erfindung betrifft einen Aktuator für eine Kupplungsbetätigungsvorrichtung mit wenigstens einem Einlass zur Anbindung an einen Geberzylinder und wenigstens einem Auslass zur Anbindung an einen Nehmerzylinder.

Kupplungsaktuatoren sind grundsätzlich elektromechanische oder elektrohydraulische Einheiten, mit denen eine Kupplung automatisiert betätigbar ist.

Aus der DE 10 2014 224 376 A1 ist eine Kupplungsbetätigungsvorrichtung bekannt, bei der der Aktuator in ein hydraulisches System einbindbar ist. Dadurch wird ermöglicht, dass die Kupplung gleichzeitig mittels eines Pedals durch den Fahrer oder über den Aktuator betätigbar ist. Dabei besteht eine Herausforderung dahingehend, die Führung des Hydrauliköls so zu gestalten, dass bei einer gleichzeitigen Betätigung des Kupplungspedals wie auch des Aktuators der Fahrer einerseits keinerlei Änderungen bei der Pedalbetätigung bemerkt und andererseits der Aktuator störungsfrei benutzbar bleibt.

Der aus der DE 10 2014 224 376 A1 bekannte Aktuator ist dabei aufwendig im Aufbau und der Montage. Ausgehend hiervon ist es daher Aufgabe der vorliegenden Erfindung, einen Aktuator anzugeben, der einfacher aufgebaut ist.

Zur Lösung dieses Problems wird vorgeschlagen, dass sich der Einlass und der Auslass an einem Zwischenzylinder befinden, der mit einem Speicher außerhalb des Zwischenzylinders verbunden ist.

Durch das Anordnen des Speichers außerhalb des Zwischenzylinders wird es möglich, den Zwischenzylinder einfacher aufzubauen. Auch die Darstellung des Speichers wird dadurch vereinfacht. Der Speicher ist ein hydraulischer Speicher zum Speichern von Hydraulikfluid.

Vorteilhafterweise kann im Zwischenzylinder genau ein axial beweglicher Kolben angeordnet sein. Wie beschrieben soll durch den Aufbau eine Vereinfachung der einzelnen Bauteile erreicht werden. Der Aktuator weist bei diesem Aufbau ein einfaches Zylinder-Kolben-Aggregat auf, in dem ein Kolben vorhanden ist. Der Kolben ist vorteilhafterweise als Verdrängerkolben ausgebildet, das heißt, dass der zum Verdrängen des Hydraulikfluids im Zwischenzylinder ausgebildet ist.

Vorzugsweise kann wenigstens ein axial beweglicher Kolben vorgesehen sein, der beim Einfahren in den Zwischenzylinder ab einer vorgegebenen Position die Verbindung zwischen dem Auslass und dem Speicher trennt. Dadurch verdrängt der Kolben das Hydraulikfluid im Zwischenzylinder nicht in den Speicher sondern zum Nehmerzylinder hin. Dabei ist weiterhin bevorzugt, wenn sich der Auslass für den Nehmerzylinder und die Verbindungsöffnung für den Speicher an entgegengesetzten Enden bzw. Endbereichen des Zwischenzylinders befinden.

Vorteilhafterweise kann wenigstens ein axial beweglicher Kolben vorgesehen sein, der beim Einfahren in den Zwischenzylinder ab einer vorgegebenen Position eine Verbindung zwischen dem Einlass und dem Speicher herstellt. Dadurch wird bewirkt, dass bei einer möglichen Betätigung des Kupplungspedals das Hydraulikfluid aus dem Geberzylinder in den Speicher umgeleitet wird, während die Kupplungsbetätigung durch den Aktuator erfolgt. Hierzu kann der Kolben auf der Mantelfläche eine Ausnehmung aufweisen, sodass der Fluidraum des Zwischenzylinders durch den Kolben verdrängt werden kann, während die Mantelfläche eine Art Bypass für den Einlass zum Speicher hin bietet.

Vorteilhafterweise kann der Kolben mittels einer elektrischen Antriebseinheit antreibbar sein. Bevorzugt handelt es sich hierbei um einen Elektromotor. Zwischen dem Elektromotor und dem Kolben kann sich dabei eine Kupplung oder ein Getriebe befinden.

Vorzugsweise kann der Kolben in Montageposition an der Oberseite eine Nut aufweisen. Diese stellt vorteilhafterweise eine Verbindung zwischen Auslass und Einlass her. Weiter vorteilhafterweise befindet sich die Nut an der Oberseite und Stirnseite des Kolbens, und zwar zur Auslassseite hin gewandt. Dadurch kann mittels der Nut eine Entlüftung des Nehmerzylinders realisiert werden.

Vorzugsweise kann der Speicher durch einen Kraftspeicher vorgespannt sein. Dadurch entleert sich der Speicher automatisch, sobald der über den Kolben oder das Pedal auf das Hydraulikfluid eingebrachte Druck absinkt. Der Kraftspeicher kann dabei als Feder, insbesondere Schraubenfeder, ausgebildet sein. Es kann sich aber auch um einen Kraftspeicher mittels Gasdruck handeln.

Vorzugsweise kann der Speicher zumindest abschnittsweise eine dem Nehmerzylinder ähnliche oder gleiche Kraftkennlinie aufweisen. Dann bemerkt der Fahrer keinen Unterschied, ob er bei der Pedalbetätigung den Nehmerzylinder oder den Speicher füllt.

Vorzugsweise kann dabei eine als Pedalkraftsimulator bekannte Anordnung zur Erzeugung der Kraft und damit der Kennlinie verwendet werden. Diese dienen der Simulation der Gegenkraft auf ein Kupplungspedal statt einer hydraulischen Strecke, wie es in clutch-by-wire-Anordnungen notwendig ist.

Vorzugsweise kann in axialer Richtung der Auslass näher am Einlass angeordnet sein als die Verbindungsöffnung zum Speicher. Dadurch bleibt auch beim Einfahren des Kolbens in den Zwischenzylinder die Verbindung zwischen Einlass und Auslass länger erhalten als zwischen Auslass und Speicher.

Vorzugsweise kann die vorgegebene Position die Gleiche, d.h. identisch, sein. Wie weiter oben beschrieben wird durch die Kolbenbewegung zum Einen die Verbindung zwischen Auslass und Speicher getrennt und andererseits eine Verbindung zwischen Einlass und Speicher hergestellt. Wählt man die Gestaltung des Kolbens so, dass die vorgegebene Position die Gleiche ist, so wird in dem Moment, in dem der Aktuator die Befüllung des Kolbens vornimmt, eine mögliche Hydraulikfluidbewegung durch die Betätigung des Kupplungspedals in den Speicher umgeleitet. Wird das Kupplungspedal jedoch nicht betätigt, so wird durch die Kolbenwegung die Kupplung ein-oder ausgekuppelt als ob keinerlei Geberzylinder vorhanden wäre.

Die Verbindung zwischen Einlass und Speicher kann vorzugsweise mittels wenigstens eines als Nut oder Bohrung ausgebildeten Bypasses ausgestaltet sein. Die Nut kann entlang der Mantelfläche des Kolbens verlaufen, eine Bohrung quert den Kolben in einem Abschnitt. Die Bohrung muss nicht durch die Mitte des Kolbens führen, sie kann aber.

Vorzugsweise überbrückt der Bypass ein Dichtelement. Die Abdichtung des Dichtelementes wird also durch den Bypass aufgehoben, weswegen ab einer vorgegebenen Position eine Verbindung zwischen Einlass und Speicher vorhanden ist.

Daher ist der Bypass vorteilhafterweise so ausgestaltet, dass seine Hauptachse in Richtung der Längsachse des Zwischenzylinders liegt. Dadurch kann ein definierter Übergang zwischen Verbindungsstellung und Nicht-Verbindungsstellung erreicht werden. Grundsätzlich muss sich der Bypass nur soweit in axialer Richtung erstrecken, dass er das Dichtelement überbrücken kann. Bei einem langen Weg in Umfangsrichtung über die Mantelfläche des Kolbens kann die Toleranz zu groß werden.

Vorteilhafterweise kann es sich bei dem Hydraulikfluid um Öl, insbesondere Hydrauliköl, handeln.

Vorteilhafterweise können sich zwischen dem Einlass und dem Auslass und/oder dem Einlass und dem Speicher Dichtelemente befinden, die den Kolben gegenüber dem Zwischenzylinder abdichten. Hierbei kann es sich insbesondere um Dichtringe handeln.

Daneben betrifft die Erfindung eine Kupplungsbetätigungsvorrichtung mit einem Geberzylinder, einem Nehmerzylinder und einem Aktuator. Die Kupplungsbetätigungsvorrichtung zeichnet sich dadurch aus, dass der Aktuator wie beschrieben ausgebildet ist.

Daneben betrifft die Erfindung ein Kraftfahrzeug mit einer Kupplungsbetätigungsvorrichtung. Das Kraftfahrzeug zeichnet sich dadurch aus, dass die Kupplungsbetätigungsvorrichtung wie beschrieben ausgebildet ist.

Weitere Vorteile, Merkmale und Einzelheiten der Erfindung ergeben sich aus der folgenden Beschreibung von Ausführungsbeispielen und Figuren. Dabei zeigen:
- Figur 1: ein Kraftfahrzeug,
- Figur 2: eine Betätigungsvorrichtung in einer ersten Betriebssituation,
- Figur 3: eine Kupplungsbetätigungsvorrichtung in einer zweiten Betriebssituation,
- Figur 4: eine Kupplungsbetätigungsvorrichtung in einer dritten Betriebssituation, und
- Figur 5: eine Kupplungsbetätigungsvorrichtung in einer vierten Betriebssituation.

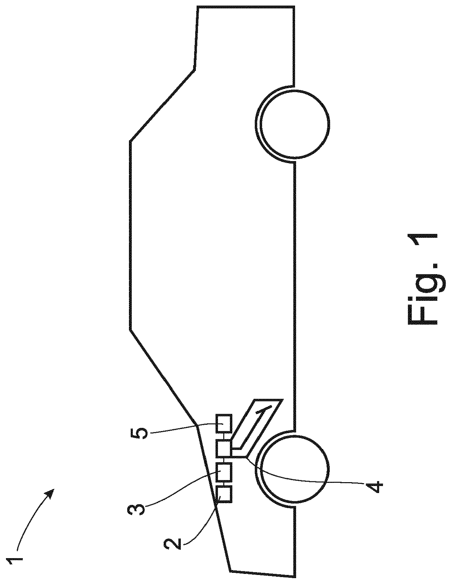

Figur 1 zeigt ein Kraftfahrzeug 1 mit einer Antriebseinheit 2, einer Kupplung 3, einer Kupplungsbetätigungsvorrichtung 4 und einem Getriebe 5. Die Kupplung 3 kann grundsätzlich eine trockene oder nasslaufende Kupplung sein. Sie kann sowohl als "normally open" als auch "normally closed" ausgestaltet sein. Weiterhin kann es sich um eine gezogene oder gedrückte Kupplung handeln. Besonders bevorzugt handelt es sich um eine "normally closed" und gedrückte, trockene Einscheiben-Reibungskupplung.

Die Kupplungsbetätigungsvorrichtung 4 ist wie in den folgenden Figuren dargestellt ausgestaltet.

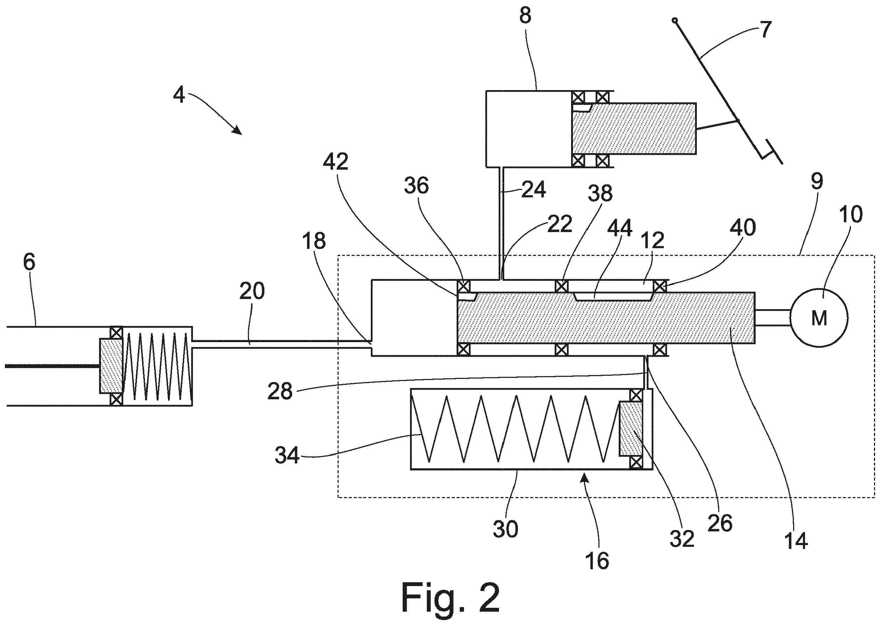

Figur 2 zeigt eine Kupplungsbetätigungsvorrichtung 4 in einer ersten Betriebsstellung, bei der der Nehmerzylinder 6 in einer Nicht-Betätigungsposition ist. Ist die Kupplung "normally closed", so ist sie bei diesem Betriebszustand des Nehmerzylinders 6 eingekuppelt. Wird der Nehmerzylinder 6 betätigt und über ihn in die Kupplung 3, wird die Kupplung 3 ausgekuppelt.

Dies wird bei der folgenden Beschreibung angenommen. Bei einer "normally open"-Kupplung wäre es genau umgekehrt. Ohne Einschränkung der Allgemeinheit wird aber im Folgenden auf eine "normally-closed"-Kupplung abgestellt.

Die Kupplungsbetätigungsvorrichtung 4 weist neben dem Nehmerzylinder 6 auch ein Kupplungspedal 7 sowie einen Geberzylinder 8 auf. Das Kupplungspedal 7, der Geberzylinder 8 und der Nehmerzylinder 6 können wie aus dem Stand der Technik bekannt ausgebildet sein. An sie sind keine veränderten Anforderungen zu stellen. Verbindet man den Nehmerzylinder 6 und den Geberzylinder 8 durch eine einfache Leitung so erhält man eine bekannte Kupplungsbetätigungsvorrichtung 4 für ein manuelles Schaltgetriebe.

Um gleichzeitig eine automatisierte Betätigung vornehmen zu können ist zwischen den Geberzylinder 8 und den Nehmerzylinder 6 ein Aktuator 9 zwischengeschaltet. Der Aktuator 9 besteht im Wesentlichen aus einem Elektromotor 10 als Antriebsvorrichtung, einen Zwischenzylinder 12 und einem darin axial verschieblichen Kolben 14.

Der Zwischenzylinder 12 und der Kolben 14 bilden ein Kolben-Zylinder-Aggregat, wobei das Präfix "zwischen" lediglich aussagen soll, dass sich der Zwischenzylinder 12 zwischen dem Geberzylinder 8 und dem Nehmerzylinder 6 befindet. Weiterhin weist die Kupplungsbetätigungsvorrichtung 4 einen zum Zwischenspeicher 12 externen Speicher 16 auf. Der Zwischenzylinder 12 hat wenigstens vier Durchgangsausnehmungen zur Herstellung der gewünschten Funktionalität. Mit dem Nehmerzylinder 6 ist der Zwischenspeicher 12 über den Auslass 18 und die Verbindungsleitung 20 verbunden. Mit dem Geberzylinder 8 ist der Zwischenspeicher 12 über den Einlass 22 und die Verbindungsleitung 24 verbunden. Mit dem Speicher 16 ist der Zwischenzylinder 12 über die Verbindungsöffnung 26 und eine Verbindungsleitung 28 verbunden. Dabei sind die Verbindungsleitungen 20, 24 und 28 grundsätzlich ganz oder auch teilweise entbehrlich. Beispielsweise kann der Speicher 16 so an den Zwischenzylinder 12 angebracht werden, dass die Verbindungsleitung 28 entbehrlich ist. Trotzdem ist der Speicher 16 extern zum Zwischenzylinder 12 angeordnet, solange er nicht im Innenraum des Zwischenzylinders 12 angeordnet ist.

Der Motor 10 kann mit dem Kolben 14 grundsätzlich beliebig verbunden sein. Letzen Endes muss nur eine Drehbewegung des Elektromotors 10 in eine Axialbewegung des Kolbens 14 umgewandelt werden. Hierzu kann sich zwischen Elektromotor 10 und Kolben 14 ein Getriebe befinden.

Der Speicher 16 besteht aus einem Speicherzylinder 30, der einen vorgespannten Kolben 32 aufweist. Die Vorspannung kann beispielsweise mittels einer Schraubenfeder 34 erfolgen.

Innerhalb der Wandung des Zwischenzylinders 12 oder an der Innenwand befinden sich wenigstens drei Dichtringe 36, 38 und 40. Der Dichtring 36 ist dabei zwischen Auslass 18 und Einlass 22 angeordnet, der Dichtring 38 zwischen Einlass 22 und der Verbindungsöffnung 26. In Einbauposition an der Oberseite des Kolbens befindet sich vorteilhafterweise eine Nut 42, die zur Überbrückung des Dichtrings 36 ausgelegt ist. Über die Nut 42 kann der Nehmerzylinder 6 entlüftet werden, da sich gegebenenfalls ansammelnde Luft an der Oberseite innen im Zwischenzylinder 12 ansammelt. Über die Nut 42 kann die Luft dann über den Einlass 22 und die Verbindungsleitung 24 sowie den Geberzylinder 8 aus dem hydraulischen System herausgeführt werden.

Dabei ist auch klar, dass der Einlass 22 und der Auslass 18 sowohl als Einlass wie auch als Auslass je nach Betriebssituation fungieren können. Die Namensgebung bezieht sich einerseits auf die Betätigung der Kupplung und andererseits darauf, die Öffnungen voneinander unterscheiden zu können. Dies gilt selbstverständlich nicht nur in Bezug auf Figur 2, sondern für die gesamte Erfindung.

Die Funktion des Bypasses 44 wird weiter unten erläutert.

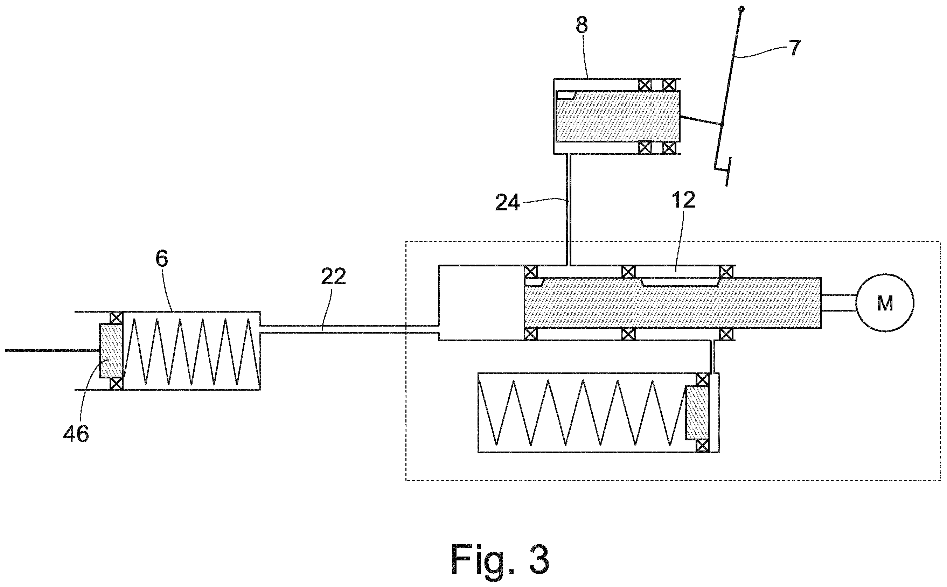

Figur 3 zeigt eine Betätigung der Kupplung 3 durch das Kupplungspedal 7. Dabei wird das Hydraulikfluid aus dem Geberzylinder 8 über die Verbindungsleitungen 24 und 22 in den Nehmerzylinder 6 befördert, wo der Kolben 46 des Nehmerzylinders 6 bewegt wird. Die Ausgestaltung des Geberzylinders 8 und des Nehmerzylinders 6 ist dabei rein schematisch dargestellt, es können sämtliche bekannten Ausgestaltungen zur Realisierung herangezogen werden. Weder in Figur 3 noch in den anderen Figuren und Ausführungsformen der Nehmerzylinder 6 noch der Geberzylinder 8 einen Kolben aufweisen oder die dargestellten Dichtelemente. Hierbei handelt es sich lediglich um bevorzugte Ausführungsformen.

Beendet der Fahrer die Betätigung des Kupplungspedals 7, so gelangt das Hydraulikfluid vom Nehmerzylinder 6 zurück in den Geberzylinder 8. Der Zwischenzylinder 12 wird dabei passiert, ohne dass ein Unterschied oder sein Vorhandensein zu bemerken wären.

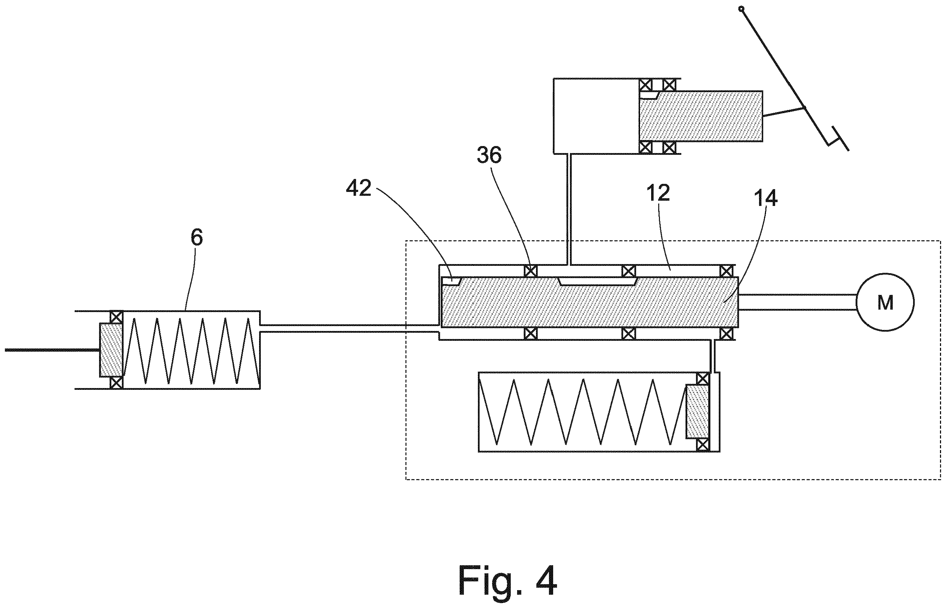

Figur 4 zeigt eine automatisierte Betätigung der Kupplung 3. Dabei wird der Kolben 14 in den Zwischenzylinder 12 verfahren, sodass das im Zwischenzylinder 12 vorhandene Hydraulikfluid in den Nehmerzylinder 6 gepresst wird.

Nachdem die Nut 42 beim Verschieben des Kolbens 14 soweit verschoben ist, dass sie den Dichtungsring 36 nicht mehr überbrückt fungiert der Kolben 14 als Verdränger und presst das Hydraulikfluid aus dem Zwischenzylinder 12 heraus.

Dabei wurde bei jeweils getrennten Betätigungen der Kupplung 3 über den Nehmerzylinder 6 bei alleiniger Verwendung des Kupplungspedals 7 oder des Aktuators 9 der Speicher 16 nicht verwendet.

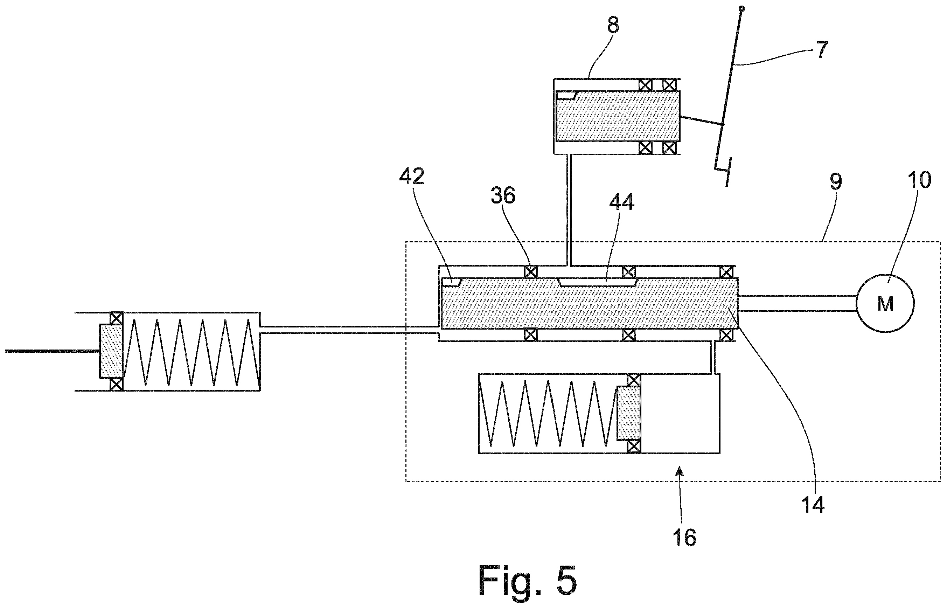

Dies ändert sich, wenn, wie in Figur 5 dargestellt, dass Kupplungspedal 7 betätigt wird, obwohl der Aktuator 9 über den Elektromotor 10 die Kupplung 3 bereits betätigt oder zumindest beginnt diese zu betätigen. Hierfür wird der Bypass 44 benötigt. Dieser ist für den Geberzylinder 8 offen, sobald der Kolben 14 zusammen mit dem Dichtungsring 36 den Zwischenspeicher gegenüber dem Geberzylinder abdichtet. Der Geberzylinder 8 ist dann nicht über die Nut 42 mit dem Speicherraum des Zwischenspeichers 12 verbunden, sondern über den Bypass 44 mit dem Speicher 16. Der Bypass 44 kann dabei als Nut auf der Mantelfläche des Kolbens 14 ausgebildet sein. Diese Nut kann dabei beliebige Formen aufweisen, sie muss so breit sein, dass sie über fast die ganze Bewegung des Kolbens 14 innerhalb des Zwischenzylinders 12 eine Verbindung zwischen dem Geberzylinder 8 und dem Speicher 16 herstellt. Insbesondere kann der Bypass 44 schräg über die Manteloberfläche des Kolbens 14 führen. Der Bypass kann aber auch als Bohrung durch den Kolben 14 ausgeführt sein. Es kann sich aber auch um eine einfache gerade Nut handeln, die das Dichtelement 38 überbrückt. Dann ist der Geberzylinder 8 nämlich bereits hydraulisch mit dem Speicher 16 verbunden.

Solange der Kolben 14 nicht vollständig in die Ausgangsposition zurückgefahren ist bleibt die Verbindung zwischen dem Speicher 16 und dem Geberzylinder 8 erhalten. Dadurch kann auch ein rückführendes Hydraulikfluid aus dem Speicher in den Geberzylinder 8 gewährleistet werden.

### Bezugszeichen

- 1: Kraftfahrzeug
- 2: Antriebseinheit
- 3: Kupplung
- 4: Kupplungsbetätigungsvorrichtung
- 5: Getriebe
- 6: Nehmerzylinder
- 7: Kupplungspedal
- 8: Geberzylinder
- 9: Aktuator
- 10: Elektromotor
- 12: Zwischenzylinder
- 14: Kolben
- 16: Speicher
- 18: Auslass
- 20: Verbindungsleitung
- 22: Einlass
- 24: Verbindungsleitung
- 26: Verbindungsöffnung
- 28: Verbindungsleitung
- 30: Speicherzylinder
- 32: Kolben
- 34: Schraubenfeder
- 36: Dichtring
- 38: Dichtring
- 40: Dichtring
- 42: Nut
- 44: Bypass
- 46: Kolben

## Patentansprüche

1. Aktuator (9) für eine Kupplungsbetätigungsvorrichtung (4) mit wenigstens einem Einlass (22) zur Anbindung an einen Geberzylinder (8) und wenigstens einem Auslass (18) zur Anbindung an einen Nehmerzylinder (6), **dadurch gekennzeichnet, dass** sich der Einlass (22) und der Auslass (18) an einem Zwischenzylinder (12) befinden, der mit einen Speicher (16) außerhalb des Zwischenzylinders (12) verbunden ist.

2. Aktuator nach Anspruch 1, **dadurch gekennzeichnet, dass** im Zwischenzylinder (12) genau ein axial beweglicher Kolben (14) angeordnet ist.

3. Aktuator nach Anspruch 1 oder 2, **dadurch gekennzeichnet, dass** wenigstens ein axial beweglicher Kolben (14) vorgesehen ist, der beim Einfahren in den Zwischenzylinder (12) ab einer vorgegebenen Position die Verbindung zwischen dem Auslass (18) und dem Speicher (16) trennt.

4. Aktuator nach einem der vorangehenden Ansprüche, **dadurch gekennzeichnet, dass** wenigstens ein axial beweglicher Kolben (14) vorgesehen ist, der beim Einfahren in den Zwischenzylinder (12) ab einer vorgegebenen Position eine Verbindung zwischen dem Einlass (22) und dem Speicher (16) herstellt.

5. Aktuator nach Anspruch 4, **dadurch gekennzeichnet, dass** wenigstens ein als Nut oder Bohrung ausgebildeter Bypass (44) vorhanden ist, der eine Verbindung zwischen dem Einlass (22) und dem Speicher (16) herstellt.

6. Aktuator nach Anspruch 4 oder 5, **dadurch gekennzeichnet, dass** wenigstens ein als Nut oder Bohrung ausgebildeter Bypass (44) vorhanden ist, der ein Dichtelement überbrückt.

7. Aktuator nach einem der Ansprüche 4 bis 6, **dadurch gekennzeichnet, dass** wenigstens ein als Nut oder Bohrung ausgebildeter Bypass (44) vorhanden ist, dessen Hauptachse in Richtung der Längsachse des Zwischenzylinders (12) liegt.

8. Aktuator nach einem der Ansprüche 3 bis 7, **dadurch gekennzeichnet, dass** die vorgegebene Position die gleiche ist.

9. Aktuator nach einem der vorangehenden Ansprüche, **dadurch gekennzeichnet, dass** der Kolben (14) mittels einer elektrischen Antriebseinheit (10) antreibbar ist.

10. Aktuator nach einem der vorangehenden Ansprüche, **dadurch gekennzeichnet, dass** der Kolben (14) in Montageposition an der Oberseite eine Nut (42) aufweist.

11. Aktuator nach Anspruch 10, **dadurch gekennzeichnet, dass** die Nut (42) eine Verbindung zwischen Auslass (18) und Einlass (22) bewirkt.

12. Aktuator nach einem der vorangehenden Ansprüche, **dadurch gekennzeichnet, dass** der Speicher (16) durch einen Kraftspeicher (34) vorgespannt ist.

13. Aktuator nach einem der vorangehenden Ansprüche, **dadurch gekennzeichnet, dass** der Speicher (16) zumindest abschnittsweise eine dem Nehmerzylinder (6) ähnliche oder gleiche Kraftkennlinie aufweist.

14. Aktuator nach einem der vorangehenden Ansprüche, **dadurch gekennzeichnet, dass** in axialer Richtung der Auslass (18) näher am Einlass (22) angeordnet ist als die Verbindungsöffnung (26) zum Speicher (16).

15. Aktuator nach einem der vorangehenden Ansprüche, **dadurch gekennzeichnet, dass** wenigstens zwei Dichtelemente (36, 38) vorhanden sind, die im Zwischenzylinder (12) wenigstens drei Arbeitsräume trennen.

16. Kupplungsbetätigungsvorrichtung mit einem Geberzylinder (8), einem Nehmerzylinder (6) und einem Aktuator (9), **dadurch gekennzeichnet, dass** der Aktuator (9) nach einem der vorangehenden Ansprüche ausgebildet ist.

17. Kraftfahrzeug (1) mit einer Kupplungsbetätigungsvorrichtung (4), **dadurch gekennzeichnet, dass** die Kupplungsbetätigungsvorrichtung (4) nach Anspruch 16 ausgebildet ist.
